# EUROPÄISCHE PATENTSCHRIFT

(11) **EP 2 430 666 B1**
(45) Veröffentlichungstag und Bekanntmachung des Hinweises auf die Patenterteilung: **03.12.2014**
(21) Anmeldenummer: 10718212.3
(22) Anmeldetag: 11.05.2010
(51) Int. Cl.: H01L 31/042, F24J 2/52

(54) **TRAGANORDNUNG FÜR SOLARMODULE**
SUPPORT ARRANGEMENT FOR SOLAR MODULES
ENSEMBLE SUPPORT POUR MODULES SOLAIRES

(30) Priorität: 15.05.2009 DE 102009003151
(43) Veröffentlichungstag der Anmeldung: 21.03.2012
(73) Patentinhaber: Habdank PV-Montagesysteme GmbH & Co. KG, 73037 Göppingen (DE)
(72) Erfinder: HABDANK, Martin, 73092 Heiningen (DE); HABDANK, Peter, 73092 Heiningen (DE); BAUMANN, Ralf, 73249 Wernau (DE)
(74) Vertreter: Ruckh, Rainer Gerhard
(86) Internationale Anmeldenummer: PCT/EP2010/056460
(87) Internationale Veröffentlichungsnummer: WO 2010/130736

(56) Entgegenhaltungen:
- WO-A1-00/31477
- DE-U1- 20 303 257
- DE-U1- 20 319 065
- DE-U1-202005 008 159
- DE-U1-202005 012 993
- DE-U1-202006 011 393
- DE-U1-202008 001 010

## Beschreibung

Die Erfindung betrifft eine Traganordnung für Solarmodule.

Solaranlagen mit einer Mehrzahl von Solarmodulen, insbesondere Photovoltaikmodulen sind häufig als Freilandanlagen ausgeführt, bei welchen Pfosten in den Erdboden eingebracht, insbesondere eingerammt werden. Auf diesen Pfosten, welche typischerweise in einer oder mehreren Reihen angeordnet werden, werden Trägeranordnungen über Verbindungselemente befestigt. Trägeranordnungen enthalten typischerweise einen oder mehrere Längsträger und quer zu diesen verlaufende Modulträger, auf welchen die Solarmodule montiert werden.

Solche Traganordnungen sind beispielsweise aus DE 20 2005 008 159 U1, DE 203 03 257 U 1, DE 20 2005 012 993 U1, WO 00/31477 A1 oder der WO 2008/009530 A2 bekannt. In der DE 203 19 065 U1 ist zusätzlich die Möglichkeit erwähnt, eine als U-förmiger Bügel ausgeführtes Verbindungselement höhenverstellbar und seitlich verkippbar an einem Pfosten zu befestigen.

Da das Einrammen der Pfosten nur mit beschränkter Präzision erfolgt, kann es von Vorteil sein, eine Nachjustiermöglichkeit, insbesondere bezüglich der Höhenposition der Verbindungselemente zur Verfügung zu haben.

Für eine Höhenverstellbarkeit ist in der DE 20 2008 001 010 U1 eine Anschlussklaue vorgesehen, welche am oberen Ende des Erdpfostens mit diesem verschraubt wird, wobei die Schrauben in Langlöchern des Pfostens einliegen und die Anschlussklaue daher in unterschiedlichen Höhenpositionen klemmend an den Seitenflächen des Erdpfostens festgelegt werden kann.

Die Höhenverstellbarkeit über Langlöcher ist auch für Dachmontagesysteme bekannt und beispielsweise in der DE 101 52 354 C1 oder der DE 10 2005 018 687 B3 beschrieben, wobei bei letzterer in einer Ausführung mit Langloch eine Verzahnung von einander gegenüber stehenden Flächen oder als Alternative eine Reihe von Bohrungen für den Durchgriff der Befestigungsschraube vorgesehen sein können. Verzahnungen sind bei Aluminiumprofilen als Bauteile relativ einfach herstellbar, wegen des Materials aber nur begrenzt tragfähig. Verzahnungen in Stahlbauteilen, welche für hohe Tragkraft geprägt sein sollten, sind aufwendig und können sich bei einer nachfolgenden Frostschutz-Oberflächenbehandlung mit dem Rostschutzmaterial zusetzen.

Der vorliegenden Erfindung liegt die Aufgabe zugrunde, bei einer hoch belastbaren Traganordnung für Solarmodule eine vorteilhafte Möglichkeit zur Höhenverstellung anzugeben.

Die Erfindung ist im unabhängigen Anspruch beschrieben. Die abhängigen Ansprüche enthalten vorteilhafte Ausgestaltungen und Weiterbildungen der Erfindung.

Die Erfindung ermöglicht durch das zusätzlich zu den gebräuchlichen Befestigungselementen vorgesehene wenigstens eine Arretierelement eine zumindest teilweise Trennung der Höhenverstellbarkeit von der Befestigung. Insbesondere kann eine hohe Stabilität der vertikalen Abstützung mit einer besonders günstigen Handhabung bei der Verstellung der Höhenposition kombiniert werden, indem die gegenüber stehenden Flächenabschnitte von Pfosten und Verbindungselement sowie das Arretierelement in einer gelockerten Stellung des Befestigungselements über dieses unverlierbar verbunden bleiben, aber eine vertikale Verlagerung des Verbindungselements relativ zum Pfosten und eine Veränderung wenigstens eines der beiden Formschlüsse ermöglichst ist.

Die die Abstützkräfte auffangenden Bauteile, Pfosten, Verbindungselement, Arretierelement und Befestigungselement bestehen vorteilhafterweise aus Stahl und können vorteilhafterweise aus rostfreiem Stahl oder mit rostschützend behandelter, insbesondere verzinkter Oberfläche ausgeführt sein.

Als erster und zweiter Formschluss seien dabei jeweils die ineinandergreifenden Komponenten von wenigstens zwei Bauteilen verstanden, welche zu einer formschlüssigen gegenseitigen Abstützung zweier Bauteile in vertikaler Richtung dienen. Als vertikale Richtung sei bei einer Kraftabstützung oder Verlagerung auch eine geringfügige Winkelabweichung von der Lotrechten, beispielsweise bei einer Verkippung des Verbindungselements um eine im wesentlichen horizontale Achse verstanden. Auch bei der horizontalen Richtungsangabe seien geringfügige Abweichungen als mit eingeschlossen verstanden. Horizontale und vertikale Richtungsangaben beziehen sich auf typische Aufstellungen der Traganordnung über einer horizontal ebenen Fläche.

Die erfindungsgemäße Traganordnung kann vorteilhafterweise auf bekannte und bewährte Bauformen angewandt werden, bei welchem als Befestigungselemente Schrauben oder Gewindebolzen durch den ersten und zweiten Flächenabschnitt durchgreifen und in einem Befestigungszustand die beiden Flächenabschnitte gegeneinander verspannen. Typischerweise liegt das Verbindungselement mit zwei zweiten Flächenabschnitten, die z B. als Stegbleche in einer Schweißkonstruktion als Verbindungselement ausgeführt sein können, an zwei einander abgewandten Seiten zweier zueinander paralleler erster Flächenabschnitte des Pfostens an. Die Befestigungselemente können, insbesondere bei geschlossenen Hohlprofilen des Pfostens, als über beide erste und zweite Flächenabschnitte durchgehende Gewindebolzen, Schrauben oder dergleichen oder, insbesondere einseitig offenen Profilen des Pfostens wie den häufig eingesetzten Sigma-Profilen als zwei getrennte Befestigungselemente je Pfosten-Verbindungselement-Kombination vorgesehen sein. Der Pfosten kann auch zweiteilig aus einem in den Boden eingesetzten, insbesondere eingerammten Stahlprofil und einem danach am oberen Ende befestigten Pfostenkopf, an welchem der erste Flächenabschnitt des Pfostens ausgebildet ist, zusammengesetzt sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Zusammenstellung von Komponenten einer Traganordnung,
- Fig. 2: die Komponenten nach Fig. 1 in befestigtem Zustand,
- Fig. 3: ein Arretierelement,
- Fig. 4: einen horizontalen Schnitt durch eine Befestigungsstelle,
- Fig. 5: die Befestigungsstelle in gelockertem Zustand,
- Fig. 6: verschiedene Höhenpositionen des Verbindungselements,
- Fig. 7: eine Variante zu Fig. 6,
- Fig. 8: eine weitere Variante zu Fig. 6,
- Fig. 9: eine weitere Variante zu Fig. 6.

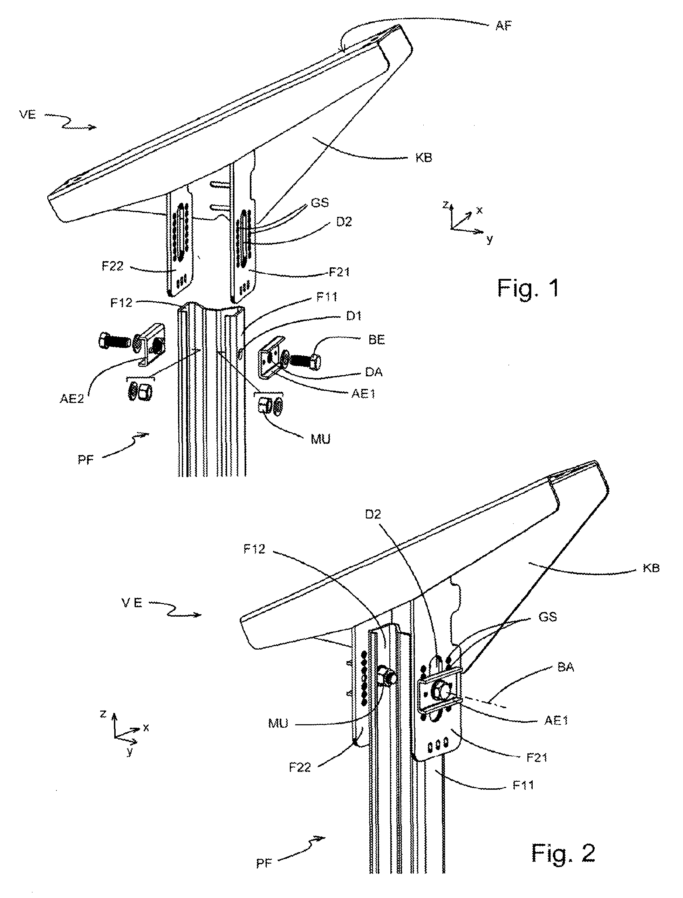

Fig. 1 zeigt in Schrägansicht für die Veranschaulichung der Erfindung wesentliche Bauteile eines Beispiels einer Traganordnung für Solarmodule, wobei die Bauteile vor dem Zusammenbau getrennt dargestellt sind. Ein rechtwinkliges x-y-z-Koordinatensystem ist mit eingezeichnet, wobei die x-Richtung eine horizontale Richtung bezeichnet, in welcher Längsträger einer nicht mit eingezeichneten Trägeranordnung verlaufen und in welcher eine Mehrzahl von Pfosten beabstandet in einer Reihe aufeinander folgen. Die y-Richtung ist eine zur x-Richtung orthogonale horizontale Richtung und mit z ist die Vertikalrichtung bezeichnet. Eine in einer z-y-Ebene liegende und gegen die z- und die y-Richtung geneigte Querrichtung ist mit q bezeichnet. Flächige Solarmodule liegen in der vollständigen Solaranlage in einer q-x-Ebenen gegen die Horizontale geneigt auf der Trägeranordnung auf.

Ein in Fig. 1 ausschnittsweise dargestellter Pfosten PF weise in an sich bekannter Art einen sogenannten Sigma-Querschnitt auf, welcher gegenüber einem C-Querschnitt einen zusätzlichen Einzug in dem mittleren Schenkel aufweist. Der Pfosten PF weist zwei in y-Richtung beabstandete Flächenabschnitte F11, F12 auf, welche in vertikalen x-z-Ebenen liegen und deren Flächennormale in y-Richtung weist. Die Flächenabschnitte F11, F12 des Pfostens PF bilden die ersten Flächenabschnitte. Der Pfosten wird typischerweise, gegebenenfalls nach Vorbohrung eines Loches im Erdboden, in den Boden eingerammt. In den ersten Flächenabschnitten F11, F12 ist jeweils ein Durchbruch D1, insbesondere in Form einer Bohrung vorgesehen, durch welchen ein Befestigungselement BE, welches insbesondere eine Schraube oder ein Gewindebolzen oder dergleichen sein kann, durchführbar ist. Bei den Pfosten mit Sigma-Querschnitt ist jeweils ein Befestigungselement BE für jeden der ersten Flächenabschnitte F11, F12 vorgesehen. Bei anderen Pfostenquerschnitten kann auch ein durch die fluchtenden Durchbrüche in den in y-Richtung beabstandeten ersten Flächenabschnitten F11, F12 durchgehendes Befestigungselement vorgesehen sein.

Ein Verbindungselement VE weist zwei Stegplatten F21, F22 auf, deren Plattenflächen in Richtung ihrer Flächennormalen voneinander beabstandet sind. Die Stegplatten F21, F22 bilden die zweiten Flächenabschnitte auf Seiten des Verbindungselements VE. In Einbaulage liegen die Plattenebenen der zweiten Flächenabschnitte F21, F22 in x-z-Ebenen und die gemeinsame Flächennormale verläuft in y-Richtung. Die Stegplatten F21, F22 sind mit einem Konsolenblech KB verbunden, insbesondere verschweißt, welches eine in einer q-x-Ebene liegende Auflagefläche AF aufweist. Auf der Auflagefläche AF können insbesondere in an sich aus dem Stand der Technik bekannter Weise in x-Richtung verlaufende Längsträger aufgelegt und mit dem Konsolenblech KB verbunden sein. Auf den Längsträgern können wiederum in q-Richtung verlaufende Modulträger befestigt sein, welche die Solarmodule tragen.

In den zweiten Flächenabschnitten F21, F22 sind bei dem erfindungsgemäßen bevorzugten Beispiel Durchbrüche D2 in Form von Langlöchern vorgesehen, wobei die Durchbrüche D2 durch die zweiten Flächenabschnitte F21, F22 in y-Richtung zueinander fluchtend angeordnet sind. Zusätzlich sind in den zweiten Flächenabschnitten F21, F22 Gegenstrukturen GS vorgesehen, welche anhand der nachfolgenden Figuren noch näher beschrieben sind und welche mit Arretierstruktkuren AS von Arretierelementen AE1, AE2 zusammenwirken. Die Gegenstrukturen GS können insbesondere als Durchbrüche, vorzugsweise Bohrungen, durch die zweiten Flächenabschnitte F21, F22 ausgeführt sein.

Zusätzlich sind als wesentliche Elemente der erfindungsgemäßen Traganordnung Arretierelemente AE1, AE2 vorgesehen, an welchen Arretierstrukturen AS ausgebildet sind, welche, wie bereits erwähnt, mit den Gegenstrukturen GS an den zweiten Flächenabschnitten F21, F22 zusammen wirken.

Beim Aufbau der Traganordnungen aus den in Fig. 1 dargestellten Bauteilen wird das Verbindungselement so an dem Pfosten PF angeordnet, dass die zweiten Flächenabschnitte F21, F22 eng an den nach außen weisenden Seiten der ersten Flächenabschnitte F11, F12 anliegen. Typischerweise ist im Ausgangszustand der gegenseitige Abstand in y-Richtung zwischen den beiden zweiten Flächenabschnitten F21, F22 um ein geringes Maß größer als das Außenmaß des Pfostens PS zwischen den ersten Flächenabschnitten F11, F12, wodurch insbesondere Fertigungstoleranzen berücksichtigt werden können. Die zweiten Flächenabschnitte F21, F22 umgreifen in der in Fig. 2 skizzierten montierten Stellung von außen die ersten Flächenabschnitte F11, F12 und sind so ausgerichtet, dass die Durchbrüche D1 in den ersten Flächenabschnitten innerhalb der Projektionen in y-Richtung der Durchbrüche D2 in den zweiten Flächenabschnitten liegen.

Die Arretierelemente AE1, AE2 weisen gleichfalls Durchbrüche DA auf, welche im montierten Zustand mit den Durchbrüchen D1 in den ersten Flächenabschnitten fluchten. Die Arretierelemente AE1, AE2 liegen auf den den ersten Flächenabschnitten abgewandten Außenseiten der zweiten Flächenabschnitte F21, F22 an und die Arretierstrukturen AS und die Gegenstrukturen GS sind in der in Fig. 2 dargestellten Befestigungsstellung in gegenseitigem formschlüssigem Eingriff. Befestigungselemente BE sind in Richtung einer Elementachse BA, welche in y-Richtung verläuft, durch die Durchbrüche DA der Arretierelemente, D2 der zweiten Flächenabschnitte und D1 der ersten Flächenabschnitte hindurchgeführt. Die Befestigungselemente können insbesondere Schrauben sein, welche mit an den Innenseiten der ersten Flächenabschnitte F11, F12 liegenden Muttern MU verschraubt sind.

Eine vertikale Abstützung des Verbindungselements VE mit einer darauf angeordneten Trägerstruktur und Solarmodulen erfolgt über die zweiten Flächenabschnitte F21, über zweite Formschlüsse, welche durch den formschlüssigen Eingriff zwischen den Gegenstrukturen GS und den Arretierstrukturen AS gebildet sind, über die Arretierelemente AE1, AE2 und einen durch die Befestigungselemente BE zwischen den Durchbrüchen DA der Arretierelemente und den Durchbrüchen D1 in den ersten Flächenabschnitten gebildete erste Formschlüsse. Zwischen den zweiten Flächenabschnitten F21, F22 einerseits und den ersten Flächenabschnitten F11, F12 besteht kein direkter Formschluss in dem montierten Zustand. Über die Arretierelemente AE1, AE2 und die genannten Formschlüsse ist aber dennoch eine formschlüssige Abstützung des Verbindungselements an dem Pfosten PF gegeben.

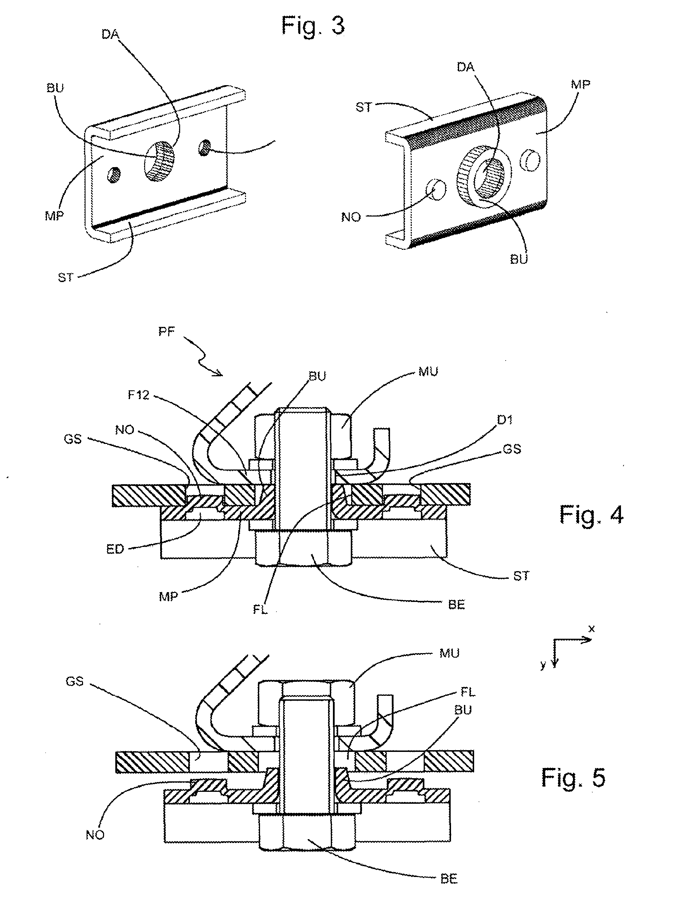

Fig. 3 zeigt in zwei verschiedenen Ansichten eine vorteilhafte Ausführung eines Arretierelements, welches insbesondere durch Umformung eines ebenen Blechzuschnitts herstellbar ist. Das skizzierte Arretierelement besitzt einen mittleren Plattenabschnitt MP, von welchem zwei Stegkanten ST umgebogen sind, welche eine Formstabilsierung des Arretierelements im Einsatz bilden. Ein mittlerer Durchbruch DA ist vorteilhafterweise in Form eines kurzen Buchsenansatzes BU ausgeführt, welcher über die Plattenfläche des Plattenabschnitts MP vorsteht. Der Buchsenansatz BU ist von seinem Innendurchmesser auf den Schaftdurchmesser der Befestigungselemente BE abgestimmt, welche im montierten Zustand durch den Durchbruch DA durchgeführt werden. Der Durchbruch DA mit dem Buchsenansatz BU kann insbesondere durch eine Umformung aus dem ebenen Plattenabschnitt MP hergestellt werden.

Gleichfalls gegen die Plattenfläche des Plattenabschnitts MP vorstehend sind zwei Nocken NO vorgesehen, welche vorzugsweise symmetrisch zu dem Durchbruch DA angeordnet sind. Die Überstände des Buchsenansatzes BU und der Nocken NO sind bezüglich des Plattenabschnitts MP entgegen gesetzt zur Ausrichtung der Stegkanten ST gerichtet.

In der in Fig. 2 skizzierten Einbaulage liegt der Plattenabschnitt MP in einer x-z-Ebene und die Überstände der Nocken NO und des Buchsenansatzes BU bzw. die Abwinkelung der Stegkanten ST weisen in entgegen gesetzter Richtung parallel zur y-Richtung. Die Nocken NO und der Durchbruch DA liegen im wesentlichen in einer Linie in x-Richtung. Die Stegkanten ST sind an in x-Richtung verlaufenden Kanten des Plattenabschnitts MP gegen diesen abgewinkelt.

Die Nocken NO sind vorteilhafterweise im wesentlichen kreiszylindrisch und in bevorzugter Ausführung durch Kaltverformung mittels eines Ausdrückwerkzeugs aus der Plattenfläche des Plattenabschnitts MP hergestellt.

Fig. 4 und Fig. 5 zeigen Schnittansichten mit x-y-Schnittebenen durch die Elementachse BA eines Befestigungselements BE, wobei in Fig. 4 das Befestigungselement BE fest mit der Mutter MU als Gegenelement verschraubt ist und in Fig. 5 eine gegenüber Fig. 4 gelockerte Verbindung dargestellt ist.

In dem Befestigungszustand nach Fig. 4 mit fest angezogener Verschraubung zwischen einer Schraube als Befestigungselement BE und einer Mutter an der Innenseite des ersten Flächenabschnitts F11 des Pfostens PF ist der zweite Flächenabschnitt F21 gegen den ersten Flächenabschnitt F11 verspannt und liegt an diesem an. Das Arretierelement AE1 liegt seinerseits an der dem ersten Flächenabschnitt F11 abgewandten Außenseite des zweiten Flächenabschnitts F21 mit dem Plattenabschnitt MP an und greift mit den die Arretierstrukturen bildenden Nocken NO in durch Bohrungen gebildete Gegenstrukturen in dem zweiten Flächenabschnitt F21 ein. Zugleich liegt der Buchsenansatz BU innerhalb des durch ein Langloch FL gebildeten Durchbruchs D2 in dem zweiten Flächenabschnitt ein. Der Buchsenansatz BU fluchtet mit dem Durchbruch D1 in dem ersten Flächenabschnitt F11. Der Schaft der Schraube als Befestigungselement BE greift durch den Durchbruch DA in dem Buchsenansatz BU und durch den Durchbruch D1 in dem ersten Flächenabschnitt F11. Zwischen den Schraubenkopf und den Plattenabschnitt MP des Arretierelements kann in gebräuchlicher Weise eine Zwischenscheibe AS eingelegt sein. Der Überstand des Buchsenansatzes BU gegen die Fläche des Plattenabschnitts MP ist um ein geringes Maß größer als der Überstand der Nocken NO über die Plattenfläche des Plattenabschnitts MP.

Wird das Befestigungselement BE gegenüber der in Fig. 4 dargestellten Befestigungsstellung gelockert und um ein geringes Maß aus der Mutter MO ausgedreht, so kann das Arretierelement MP in y-Richtung gegenüber dem zweiten Flächenabschnitt F21 von diesem weg verschoben werden, so dass die die Arretierstrukturen AS bildenden Nocken NO aus dem zuvor in Fig. 4 gegebenen formschlüssigen Eingriff mit den die Gegenstrukturen GS bildenden Bohrungen in dem zweiten Flächenabschnitt F21 ausrücken. Zwischen dem ersten und dem zweiten Flächenabschnitt kann sich dabei auch wieder ein dünner Spalt ergeben. Der Buchsenabschnitt BU kann auch bei aus den Gegenstrukturen GS ausgerückten Nocken NO noch innerhalb des durch das Langloch FL gebildeten Durchbruchs D2 durch den zweiten Flächenabschnitt liegen. Bei aus den Gegenstrukturen GS ausgerückten Nocken NO des Arretierelements ist der zweite Formschluss aufgehoben und das Verbindungselement kann senkrecht zur Zeichenebene der Fig. 5 relativ zu dem Pfosten PF verschoben werden. Eine Verschiebung senkrecht zur Zeichenebene der Fig. 5 bedeutet eine Verlagerung in vertikaler z-Richtung. Die Position des Arretierelements AE1 relativ zu dem Pfosten PF bzw. dessen erstem Plattenabschnitt ist durch den weiter bestehenden Formschluss zwischen dem Durchbruch D1 im ersten Flächenabschnitt F11 und dem Durchbruch DA im Arretierelement über den Schaft des Befestigungselements unverändert.

Die Verschiebung des Verbindungselements in z-Richtung relativ zum Pfosten PF und zum Arretierelement AE1 in der gelockerten Stellung des Befestigungselements nach Fig. 5 ermöglicht die veränderte Positionierung des Verbindungselements relativ zu dem Arretierelement in einer anderen Höhenposition, in welchem die Nocken NO als Arretierstrukturen wiederum mit Gegenstrukturen GS im zweiten Flächenabschnitt F21 fluchten und das Arretierelement durch Verschiebung auf den zweiten Flächenabschnitt F21 zu erneut einen zweiten Formschluss zwischen den Nocken NO und Gegenstrukturen GS herstellen kann.

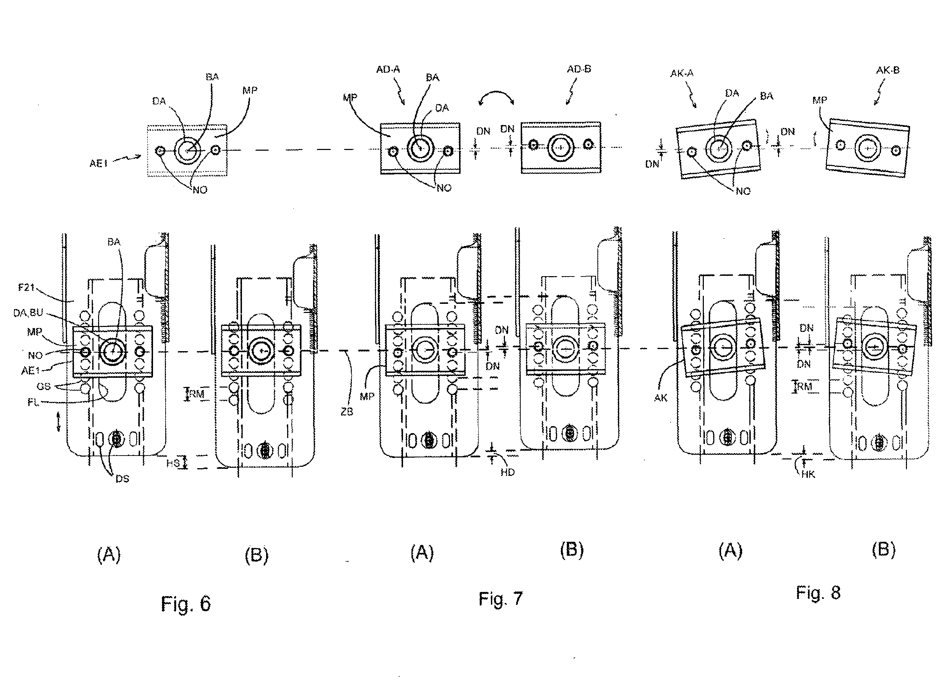

Fig. 6 zeigt mit Blickrichtung in y-Richtung auf einen zweiten Flächenabschnitt F21 und ein Arretierelement AE1 in zwei Darstellungen (A) und (B) zwei um einen Höhenverstellschritt HS vertikal verschiedene Höhenpositionen des zweiten Flächenabschnitts F21 relativ zu dem in der Höhe als fest angesehenen Durchbruch DA durch das Arretierelement. Das mit dem Schaft durch den Durchbruch DA des Arretierelements greifende Befestigungselement ist der Übersichtlichkeit halber in Fig. 6 weg gelassen.

Die Gegenstrukturen bilden in dem skizzierten Ausführungsbeispiel der Fig. 6 zwei beidseits des Langlochs FL angeordnete vertikale Reihen von Bohrungen, deren Bohrungsmittelpunkte um ein Rastermaß RM vertikal gegeneinander versetzt sind. In vertikaler Richtung aufeinanderfolgende Bohrungen sind durch Materialstege MS voneinander getrennt, so dass die Strukturen eine hohe Stabilität gegen Ausreißen der Bohrungen RS auch bei hoher Belastung bilden.

In dem in Fig. 6 (A) skizzierten Beispiel sei eine Höhenposition des zweiten Flächenabschnitts F21 eingestellt, in welchem die Nocken NO des Arretierelements in Eingriff stehen mit den von oben gezählt zweiten Bohrungen der parallelen Lochreihen der Gegenstrukturen GS. Demgegenüber zeigt Fig. 6 (B) eine Höhenposition des zweiten Flächenabschnitts F21 nach einer Verschiebung des Verbindungselements in vertikaler Richtung nach oben, wobei in dieser neuen Position die Nocken NO des Arretierelements AE1 mit den von oben gezählt dritten Bohrungen der Lochreihen in Eingriff stehen. Auf diese Weise ist der zweite Flächenabschnitt F21 bzw. das Verbindungselement VE, innerhalb dessen der zweite Flächenabschnitt F21 als starr angeordnet anzusehen ist, in Schritten HS, welche dem Rastermaß RM der Lochreihen entsprechen, in vertikaler Richtung in verschiedene Höhenpositionen einstellbar. Dabei bleiben in der gelockerten Stellung des Befestigungselements nach Fig. 5 vorteilhafterweise die einzelnen Bauteile unverlierbar miteinander verbunden und die Handhabung ist besonders vorteilhaft. Durch die Abstützung in dem zweiten Formschluss über zwei Nocken NO und zugehörige Bohrungen der Gegenstrukturen GS verteilt sich die abzustützende Kraft auf zwei Teil-Formschlüsse des zweiten Formschlusses und der Durchmesser der Nocken bzw. der Bohrungen als Gegenstrukturen GS kann gegenüber einer nur einfachen Abstützung wie diese über das Befestigungselement BE und die Durchbrüche DA im Arretierelement und D1 im ersten Flächenabschnitt gegeben ist, deutlich reduziert sein. Dies begünstigt unter Berücksichtigung der aus Stabilitätsgründen vorzusehenden Materialstege MS wiederum eine engere Anordnung der Bohrungen GS in vertikaler Richtung und damit ein kleines Rastermaß und kleine Schritte der vertikalen Verstellbarkeit.

In Fig. 6 sind in dem zweiten Flächenabschnitt F21 noch an dessen unterem Ende zusätzliche Durchbrüche DS eingezeichnet. Diese können insbesondere dafür vorgesehen sein, das Verbindungselement VE um die Elementachse BA des Befestigungselements verkippbar abzustützen, um in nichtebenem Gelände auch einen von der exakten Horizontalrichtung x abweichenden Verlauf der auf der Auflagefläche AF des Verbindungselements aufliegenden und befestigten Längsträgern zu gestatten und die Auflagefläche AF exakt an die Ausrichtung der Längsträger bei unverändert vertikaler Ausrichtung der Pfosten anpassen zu können. Insbesondere kann nach in Höhe und Winkelausrichtung erfolgter genauer Einstellung des Verbindungselements relativ zum Pfosten PF ein zusätzliches Fixierelement, insbesondere eine selbstbohrende Schraube durch einen der Durchbrüche DS hindurch in den ersten Flächenabschnitt des Pfostens PF eingedreht und damit die Winkelausrichtung des Verbindungselements um die Elementachse BA des Befestigungselements fixiert werden.

Während bei dem zuvor geschilderten Beispiel die Höhenverstellung des Verbindungselements relativ zu dem Pfosten in Vertikalschritten erfolgt, welche gleich dem Rastermaß der Lochreihen in dem zweiten Flächenabschnitt sind, zeigen die Fig. 7 und 8 Ausführungen, bei welchen die Höhenverstellung auch in kleineren Schritten erfolgen kann, welche gleich dem halben Rastermaß der Lochreihen in dem zweiten Flächenabschnitt sind. Die einzelnen Abbildungen in Fig. 6 bis 8 sind jeweils mit der Vertikalposition, z. B. der Elementachse BA der Befestigungselemente gleich zueinander in z-Richtung positioniert. Die jeweils benutzten Halteelemente sind zusätzlich separat dargestellt.

In Fig. 7 ist hierfür vorgesehen, dass an dem Arretierelement AD der mit Elementachse des Befestigungselements zusammen fallende Mittelpunkt des Durchbruchs DA, durch welchen das Arretierelement ragt, nicht mit der Verbindungslinie der Mittelpunkte der Rastnocken NO zusammen fällt, sondern quer gegen diese versetzt, aber noch mittig zwischen den seitlich beabstandet liegenden Nocken angeordnet ist. Das Raster der Lochreihen sei gegenüber dem vorangegangen Beispiel unverändert und besitze insbesondere auch dasselbe Rastermaß RM der in vertikaler Richtung aufeinander folgenden Bohrungen. Der Versatz des Mittelpunkts des Durchbruches DA in dem Halteelement gegen die Verbindungslinie der Mittelpunkte der Rastnocken ist mit DN bezeichnet und beträgt 25 % des Rastermaßes RM der Lochreihen.

Das Arretierelement kann in zwei um 180° um das Befestigungselement verdrehten Ausrichtungen eingesetzt werden, wobei im Unterschied zu dem zuvor beschriebenen Arretierelement die beiden Winkelstellungen in der Art voneinander verschieden sind, dass in einem Fall, wie in Fig. 7 (A) dargestellt, die Nocken unterhalb des Mittelpunkts des Durchbruchs DA liegen und in der anderen Drehposition nach Fig. 7 (B) die Nocken oberhalb des Mittelpunkts des Durchbruchs liegen. Die beiden Drehpositionen des Arretierelements sind in den separaten Darstellungen des Arretierelements mit DA-A und DA-B entsprechend den Figurenteilen (A) bzw. (B) bezeichnet. Wegen der symmetrischen Anordnung der Nocken ist deren Position in seitlicher Richtung relativ zu dem Mittelpunkt des Durchbruches durch den Plattenabschnitt in beiden Drehstellungen gleich, die Vertikalpositionen der Nocken unterscheiden sich in den beiden Drehstellungen des Arretierelements aber um eine vertikale Differenz HD, welche gleich dem halben Rastermaß der Lochreihen ist.

Da die Position der Elementachse BA bzw. des Mittelpunkts des Durchbruchs DA durch den Plattenabschnitt MP wegen der Bohrung D1 im ersten Plattenabschnitt F11 und wegen des Befestigungselements fest vorgegeben ist, variiert bei Drehung des Arretierelements AD in der gelockerten Stellung des Befestigungselements um 180° die absolute Höhenposition der Rastnocken um die Hälfte des Rastermaßes der Lochreihen. Da die Höhenposition der Rastnocken bei Herstellung des Eingriffes mit Bohrungen der Gegenstrukturen deren vertikale Höhenposition festlegt, ergeben sich je nach Drehstellung des Arretierelements um das Befestigungselement Höhenpositionen, welche sich um eine Differenz HD, die das halbe Rastermaß RM der Lochreihen beträgt, unterscheiden. In Fig. 7 (A) und (B) sind für den zweiten Formschluss dieselben Bohrungen des Lochrasters in dem zweiten Flächenabschnitt gewählt, so dass in der Drehstellung des Arretierelements nach Fig. 7 (A) mit den unterhalb des Mittelpunkts des Durchbruchs bzw. unterhalb der Elementachse liegenden Nocken die Höhenposition des zweiten Flächenabschnitts bzw. des starr mit diesem verbundenen Verbindungselements um ein halbes Lochrastermaß tiefer liegt als bei der in Fig. 7 (B) dargestellten Drehstellung des Arretierelements mit oberhalb der Elementachse liegenden Nocken.

Es ergibt sich damit eine Höhenverstellmöglichkeit in Schritten HD, welche gleich dem halben Rastermaß der Lochreihen sind. Selbstverständlich ist auch eine Höhenverstellung in Schritten möglich, welche gleich dem Rastermaß RM sind, wobei dann keine Verdrehung des Arretierelements um die Elementachse stattfindet.

Fig. 8 zeigt eine andere Ausführung, welche gleichfalls eine halbierte Schrittweite bei der Höhenverstellung zuläßt. In dem in Fig. 8 skizzierten Beispiel sind die links und rechts des Langlochs in dem ersten Flächenabschnitt befindlichen Lochreihen, welche jeweils das einheitliche Rastermaß in vertikaler Richtung aufweisen, relativ zueinander in der Höhe um ein halbes Rastermaß versetzt, d. h. die Bohrungen der einen Lochreihe stehen bezüglich ihrer Höhe auf Lükke zu den Bohrungen der anderen Lochreihe.

Ein Arretierelement AK mit zwei Rastnocken NO und einem zentralen Durchbruch DA ist in diesem Beispiel so aufgebaut, dass der Mittelpunkt BA des Durchbruches DA durch die Plattenfläche MP mit den beiden Nocken NO auf einer geraden Linie liegt und die Nocken in gleichen Abständen vom Mittelpunkt des Durchbruchs liegen. Der Abstand der Nocken voneinander und von dem Mittelpunkt des Durchbruchs ist um ein geringes Maß größer als der horizontale Abstand der beiden Lochreihen. Das Arretierelement ist für die Herstellung eines Formschlusses zwischen den Nocken mit zwei Bohrungen in dem Lochmuster in zwei unterschiedlichen Lagen einsetzbar, bei welchen jeweils die Verbindungslinie zwischen den Nocken gegen die Horizontale um einen geringen Winkel gekippt verläuft. In den beiden einsetzbaren Lagen ist jeweils der Mittelpunkt des einen der beiden Nocken um eine Höhendifferenz DN tiefer und der an der Nocken um dieselbe Differenz DN höher als die Höhe der Elementachse BA. Die Verkippung kann sowohl im Uhrzeigersinn als auch im Gegenuhrzeigersinn erfolgen und die Arretierelemente sind in Fig. 8 wiederum in zwei Situationen (A) und (B) mit verschiedener Neigung im Formschluss mit den Lochreihen und darüber jeweils separat als AK-A, AK-B eingezeichnet. Die Herstellung eines Formschlusses zwischen den Nocken und den Bohrungen ist nur in den zwei entgegen gesetzt geneigten Stellungen möglich.

Da wiederum die Höhe der Mitte des Durchbruches durch die Plattenfläche MP des Arretierelements durch den Durchbruch D1 in dem ersten Flächenabschnitt des Pfostens und durch das durchgeführte Befestigungselement BE bestimmt ist, legen die beiden Drehstellungen des Arretierelements zwei unterschiedliche Höhenpositionen für die Rastnocken fest, welche sich in Verbindung mit den auf Lücke gesetzten Lochreihen in dem zweiten Flächenabschnitt zu möglichen Vertikalpositionen des zweiten Flächenabschnitts ergänzen, deren Schrittweite HK der Höhenverstellbarkeit die Hälfte des Rastermaßes RM der einzelnen Lochreihen beträgt.

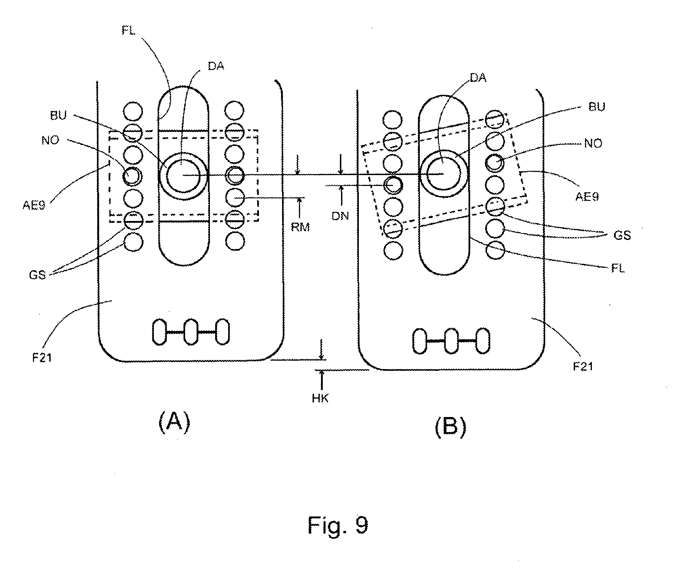

Fig. 9 zeigt eine andere Variante, mit welcher eine Höhenverstellung des Verbindungselements relativ zu dem Pfosten in gegenüber einem Lochraster verringerter Schrittweite erfolgen kann, wobei wiederum eine Verkippbarkeit des Arretierelements um die Achse der Befestigungsschraube vorgesehen ist. Die Lochreihen in dem zweiten Flächenabschnitt F21 des Verbindungselements sind wie in dem Beispiel nach Fig. 6 auf zueinander gleicher Höhe beidseitig des Langlochs FL angeordnet. Das Arretierelement, welches im wesentlichen gleich aufgebaut sei wie das Arretierelement AE1 in Fig. 6 ist in zu Fig. 6 gleicher Ausrichtung in Fig. 9 (A) relativ zu dem zweiten Flächenabschnitt F21 angeordnet. Die vertikale Höhe des Arretierelements AE9 ist bezüglich dessen Zentrum bei dem Buchsenansatz BU, welcher den Durchbruch DA umgibt, durch welchen die in Fig. 9 nicht mit eingezeichneten Befestigungsschrauben BE hindurch greifen, in der Höhe festgelegt. In der Ausrichtung des Arretierelements AE9 mit horizontal verlaufender Verbindungslinie zwischen den beiden Nocken NO kann das Verbindungselement vertikal im Rastermaß RM der Lochreihen GS verstellt werden.

Bei dem Beispiel nach Fig. 9 sind die Nocken NO und die Bohrungen der Lochreihen GS so aufeinander abgestimmt, dass die Nocken NO nicht nur in der in Fig. 9 (A) dargestellten Ausrichtung des Arretierelements AE9 in gegenüber liegende Bohrungen der Lochreihen GS eingreifen können, sondern dass auch nach einer Verkippung des Arretierelements AE9 in die in Fig. 9 (B) dargestellte verkippte Position die beiden Nocken NO des Arretierelements in je eine Bohrung der gegenüber liegenden Lochreihen eingreifen können, wobei diejenigen Bohrungen der linken und der rechten Lochreihe, in welchen die beiden Nocken NO des Arretierelements AE9 einliegen, nunmehr um ein Lochrastermaß in der Höhe voneinander verschieden sind. Gegenüber dem Mittelpunkt des Durchbruchs DA des Arretierelements sind die beiden Nocken um einen Höhenversatz DN, welcher im wesentlichen gleich der Hälfte des Rastermaßes RM ist, nach unten bzw. nach oben höhenversetzt. An den Unterkanten des zweiten Flächenabschnitts F21 ist veranschaulicht, dass sich dadurch bei verkippter Stellung des Arretierelements AE9 nach Fig. 9 (B) der zweite Flächenabschnitt F21 und damit das Verbindungselement um eine Schrittweite HK gegenüber der Position des Arretierelements AE9 nach Fig. 9(A) in der Höhe verstellen läßt, wobei der Verstellschritt HK gleich dem Höhenversatz HN der Nocken NO gegen den Mittelpunkt des Durchbruchs DA und gleich der Hälfte des Rastermaßes RM der Lochreihen ist. Vorteilhafterweise ist das Arretierelement AE9 spiegelsymmetrisch bezüglich einer Mittelebene ausgebildet, so dass eine Verkippung gegenüber der in Fig. 9 (A) dargestellten Ausrichtung in beide Drehrichtungen möglich ist. Um einen Eingriff der Nocken NO in die Bohrungen der Lochreihen GS sowohl in der unverkippten Ausrichtung des Arretierelements als auch in der verkippten Ausrichtung des Arretierelements zu ermöglichen, weisen die Nocken NO ein geringes Untermaß gegenüber den Durchmessern der Bohrungen GS auf. Ein solches Untermaß kann aufgrund des geringen Kippwinkels sehr klein ausfallen. Die Darstellung nach Fig. 9 ist diesbezüglich nicht als maßstäblich zu verstehen. Die Blickrichtung bei der Darstellung nach Fig. 9 ist parallel zur Achse der Befestigungsschraube BE von der Innenseite des zweiten Flächenabschnitts F21 aus gesehen. Die dabei verdeckten Kanten des Arretierelements AE9 sind mit unterbrochener Linie gezeichnet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Traganordnung für Solarmodule mit Pfosten (PF) und einer mittels Verbindungselementen (VE) auf diesem gehaltenen Trägerstruktur, wobei wenigstens ein Verbindungselement (VE) in verschiedenen Höhenpositionen relativ zu dem zugeordneten Pfosten (PF) an diesem befestigbar ist, wobei sich ein erster Flächenabschnitt des Pfostens (PF) und ein zweiter Flächenabschnitt des Verbindungselements (VE) in Richtung ihrer Flächennormale gegenüberstehen und durch wenigstens ein Befestigungselement (BE) in Richtung der Flächennormalen relativ zueinander gehalten sind, **dadurch gekennzeichnet, dass** wenigstens ein Arretierelement (AE1 ) vorgesehen ist, welches in Richtung der Flächennormalen gegen ersten (FL1) und zweiten (F12) Flächenabschnitt versetzt angeordnet ist, dass über einen ersten Formschluss (D1, BE, DA) des Arretierelements gegenüber dem Pfosten (PF) und über einen zweiten Formschluss (NO, GS) des Arretierelements gegenüber dem Verbindungselement eine vertikale Abstützung des Verbindungselements gegen den Pfosten über das Arretierelement gegeben ist, und dass der erste und/oder der zweite Formschluss in unterschiedlichen Höhen bezüglich des Pfostens bzw. des Verbindungselements herstellbar ist.

2. Anordnung nach Anspruch 1, **dadurch gekennzeichnet, dass** das Befestigungselement eine Gewindeverbindung vorzugsweise mit einem Gewindebolzen, insbesondere in Form einer Schraubenverbindung umfasst.

3. Anordnung nach Anspruch 1 oder 2, **dadurch gekennzeichnet, dass** das Befestigungselement (BE) durch eine Ausspanung (DA) in dem Arretierelement (AE1) greift und mit dieser den vertikal abstützenden ersten Formschluss zwischen Pfosten und Arretierelement bildet.

4. Anordnung nach einem der Ansprüche 1 bis 3, **dadurch gekennzeichnet. dass** Arretierstrukturen (AS, NO) an dem Arretierelement und Gegenstrukturen (GS) an dem zweiten Flächenabschnitt des Verbindungselements unter Bindung eines vertikal abstützenden zweiten Formschlusses miteinander in Eingriff bringbar sind.

5. Anordnung nach einem der Ansprüche 1 bis 4, **dadurch gekennzeichnet, dass** die Gegenstrukturen (GS) mehrere vertikal gegeneinander versetzte Gegenstrukturelemente aufweisen, welche verschiedenen Höhenpositionen des zweiten Flächenabschnitts relativ zu dem Arretierelement entsprechen und alternativ wählbar mit der Arretierstruktur (NO) in Eingriff bringbar sind, wobei die Gegenstrukturelemente in der Gegenstruktur ein sich in vertikaler Richtung er- streckendes Raster, insbesondere mit einheitlichem Rastermaß (RM) bilden.

6. Anordnung nach einem der Ansprüche 1 bis 5, **dadurch gekennzeichnet, dass** das Arretierelement in wenigstens zwei verschiedenen Winkelstellungen um das Befestigungselement unter Herstellung des veränderbaren Formschlusses anordenbar ist.

7. Anordnung nach Anspruch 4 und 6, dadurch gekennzeichet, dass die Arretierstrukturen in den verschiedenen Winkelstellungen zumindest teilweise unterschiedliche Höhenlagen relativ zu dem Pfosten einnehmen.

8. Anordnung nach einem der Ansprüche 1 bis 7, **dadurch gekennzeichnet, dass** der zweite Flächenabschnitt ein sich vertikal erstreckendes Langloch aufweist.

9. Anordnung nach einem der Ansprüche 1 bis 9, **dadurch gekennzeichnet, dass** das Arretierelement (AE1) auf der dem ersten Flächenabschnitt (F11 ) des Pfostens (PF) abgewandten Seite des zweiten Flächenabschnitts (F21 ) angeordnet ist.

10. Anordnung nach einem der Ansprüche 1 bis 9, **dadurch gekennzeichnet, dass** für das Befestigungselement ein unverspannter Zustand (Fig. 5) einstellbar ist, in welchem Pfosten, Verbindungselement und vorzugsweise das Arretierelement über das Verbindungselement unverlierbar verbunden sind, aber der veränderbare Formschluss aufhebbar und das Verbindungselement relativ zu dem Pfosten höhenverlagerbar ist.

11. Anordnung nach einem der Ansprüche 1 bis 10, **dadurch gekennzeichnet, dass** das Arretierelement einen Plattenabschnitt (MP) aufweist, an welchem Arretierstrukturen (NO) ausgebildet sind, wobei die Arretierstrukturen (NO) durch Vorsprünge über die Plattenfläche (MP), insbesondere durch Ausdrückungen aus der Plattenfläche gebildet sind.

12. Anordnung nach Anspruch 11, **dadurch gekennzeichnet, dass** zu den Vorsprüngen der Arretierstrukturen korrespondierende Gegenstrukturen (GS) als Vertiefungen, insbesondere als Bohrungen ausgeführt sind, welche durch Materialstege (MS) voneinander beabstandet sind.

13. Anordnung nach Anspruch 11 oder 12, **dadurch gekennzeichnet, dass** das Befestigungselement (BE) durch eine Aussparung (DA) in dem Plattenabschnitt (MP) durchgeführt ist, wobei um die Aussparung (DA) in dem Arretierelement an dem Plattenabschnitt eine Buchse ausgeformt ist.

14. Anordnung nach Anspruch 12 und 13, **dadurch gekennzeichnet, dass** die Buchse in gleicher Richtung wie die Arretierstrukturen aber um ein größeres Maß über die Plattenfläche des Plattenabschnitts übersteht und in einer Aussparung (LL) des zweiten Plattenabschnitts (F21 ) vertikal verschiebbar einliegt.

15. Anordnung nach einem der Ansprüche 1 bis 14, **dadurch gekennzeichnet, dass** das Verbindungselement innerhalb eines begrenzten Schwenkwinkels um eine zu der gemeinsamen Flächennormale parallele Schwenkachse in verschiedenen Winkelausrichtungen festlegbar ist.

## Claims

1. Support arrangement for solar modules with post (PF) and a support structure mounted thereon by means of connecting elements (VE), wherein at least one connecting element (VE) is fastenable to the associated post (PF) in different height positions relative thereto, wherein a first surface section of the post (PF) and a second surface section of the connecting element (VE) are opposite in the direction of the surface normal thereof and are held relative to one another in the direction of the surface normals by at least one fastening element (VE), **characterised in that** at least one locking element (AE1) is provided, which in the direction of the surface normals is arranged to be offset relative to the first surface section (F11) and second surface section (F12), that vertical support of the connecting element relative to the post by way of the locking element is given by way of a first mechanically positive connection (D1, BE, DA) of the locking element relative to the post (PF) and by way of a second mechanically positive connection (NO, GS) of the locking element relative to the connecting element, and that the first mechanically positive connection and/or the second mechanically positive connection can be produced at different heights with respect to the post or the connecting element.

2. Arrangement according to claim 1, **characterised in that** the fastening element comprises a threaded connection preferably with a threaded pin, particularly in the form of a screw connection.

3. Arrangement according to claim 1 or 2, **characterised in that** the fastening element (BE) engages by a cut-out (DA) in the locking element (AE1) and together therewith forms the vertical supporting first mechanically positive connection between post and locking element.

4. Arrangement according to any one of claims 1 to 3, **characterised in that** locking structures (AS, NO) at the locking element and counter-structures (GS) at the second surface section of the connecting element can be brought into engagement with one another to form a vertically supporting second mechanically positive connection.

5. Arrangement according to any one of claims 1 to 4, **characterised in that** the counter-structures (GS) comprise a plurality of counter-structure elements, which are vertically offset relative to one another and which correspond with different height positions of the second surface section relative to the locking element and can be alternatively and selectably brought into engagement with the locking structure (NO), wherein the counter-structure elements in the counter-structure form a grid, particularly with a uniform grid dimension (RM), extending in vertical direction.

6. Arrangement according to any one of claims 1 to 5, **characterised in that** the locking element can be arranged in at least two different angular settings about the fastening element to produce the variable mechanically positive connection.

7. Arrangement according to claim 4 and 6, **characterised in that** the locking structures in the different angular settings adopt at least in part different height positions relative to the post.

8. Arrangement according to any one of claims 1 to 7, **characterised in that** the second surface section has a vertically extending slot.

9. Arrangement according to any one of claims 1 to 7, **characterised in that** the locking element (AE1) is arranged on the side, which is remote from the first surface section (F11) of the post (PF), of the second surface section (F21).

10. Arrangement according to any one of claims 1 to 9, **characterised in that** for the fastening element an untightened state (Fig. 5) is settable in which the post, connecting element and preferably the locking element are captively connected by way of the connecting element, but the variable mechanically positive connection can be cancelled and the connecting element displaced in height relative to the post.

11. Arrangement according to any one of claims 1 to 10, **characterised in that** the locking element has a plate section (MP) at which locking structures (NO) are formed, wherein the locking structures (NO) are formed by projections beyond the plate surface (MP), particularly by pressed-out portions from the plate surface.

12. Arrangement according to claim 11, **characterised in that** counter-structures (GS) corresponding with the projections of the locking structures are formed as recesses, particularly as bores, which are spaced from one another by material webs (MS).

13. Arrangement according to claim 11 or 12, **characterised in that** the fastening element (BE) is formed by a cut-out (DA) in the plate section (MP), wherein a bush is shaped out around the cut-out (DA) in the locking element at the plate section.

14. Arrangement according to claim 12 and 13, **characterised in that** the bush protrudes in the same direction as the locking structures, but by a greater amount beyond the plate surface of the place section, and lies in a cut-out (LL) of the second plate section (F21) to be vertically displaceable.

15. Arrangement according to any one of claims 1 to 14, **characterised in that** the connecting element is fixable in different angular orientations within a limited pivot angle about a pivot axis parallel to the common surface normal.

## Revendications

1. Agencement de support pour panneaux solaires, comportant des poteaux (PF) et une structure de support maintenue sur ceux-ci au moyen d'éléments de liaison (VE), au moins un élément de liaison (VE) pouvant être fixé sur le poteau (PF) associé à différentes positions en hauteur par rapport à celui-ci, une première partie de surface du poteau (PF) et une deuxième partie de surface de l'élément de liaison (VE) étant en face l'une de l'autre dans la direction de la normale à leur surface et maintenues l'une par rapport à l'autre par au moins un élément de fixation (BE) dans la direction des normales à la surface, **caractérisé en ce qu'**au moins un élément d'arrêt (AE1) est prévu, lequel est disposé de manière décalée par rapport à la première (F11) et la deuxième (F12) partie de surface dans la direction des normales à la surface, qu'une première liaison de forme (D1, BE, DA) de l'élément d'arrêt par rapport au poteau (PF) et une deuxième liaison de forme (NO, GS) de l'élément d'arrêt par rapport à l'élément de liaison assurent un soutien vertical de l'élément de liaison par rapport au poteau par l'intermédiaire de l'élément d'arrêt, et que la première et/ou la deuxième liaison de forme peut être réalisée à différentes hauteurs par rapport au poteau et/ou à l'élément de liaison.

2. Agencement selon la revendication 1, **caractérisé en ce que** l'élément de fixation comprend une liaison filetée, de préférence avec un boulon fileté, en particulier sous la forme d'une liaison par vis.

3. Agencement selon la revendication 1 ou 2, **caractérisé en ce que** l'élément de fixation (BE) passe à travers un évidement (DA) dans l'élément d'arrêt (AE1) et forme avec celui-ci la première liaison de forme assurant un soutien vertical entre poteau et élément d'arrêt.

4. Agencement selon l'une des revendications 1 à 3, **caractérisé en ce que** des structures d'arrêt (AS, NO) sur l'élément d'arrêt et des structures complémentaires (GS) sur la deuxième partie de surface de l'élément de liaison peuvent être mises en prise entre elles pour former une deuxième liaison de forme assurant un soutien vertical.

5. Agencement selon l'une des revendications 1 à 4, **caractérisé en ce que** les structures complémentaires (GS) présentent plusieurs éléments de structure complémentaire décalés verticalement les uns par rapport aux autres, qui correspondent à différentes positions en hauteur de la deuxième partie de surface par rapport à l'élément d'arrêt et peuvent être mis en prise au choix avec la structure d'arrêt (NO), les éléments de structure complémentaire formant dans la structure complémentaire un réseau s'étendant dans la direction verticale, en particulier avec un pas de réseau (RM) uniforme.

6. Agencement selon l'une des revendications 1 à 5, **caractérisé en ce que** l'élément d'arrêt peut être disposé dans au moins deux positions angulaires différentes autour de l'élément de fixation pour réaliser la liaison de forme variable.

7. Agencement selon les revendications 4 et 6, **caractérisé en ce que** les structures d'arrêt occupent dans les différentes positions angulaires, au moins en partie, des positions en hauteur différentes par rapport au poteau.

8. Agencement selon l'une des revendications 1 à 7, **caractérisé en ce que** la deuxième partie de surface présente un trou oblong s'étendant verticalement.

9. Agencement selon l'une des revendications 1 à 9, **caractérisé en ce que** l'élément d'arrêt (AE1) est disposé du côté de la deuxième partie de surface (F21) éloigné de la première partie de surface (F11) du poteau (PF).

10. Agencement selon l'une des revendications 1 à 9, **caractérisé en ce qu'**il est possible de régler pour l'élément de fixation un état non serré (fig. 5) dans lequel poteau, élément de liaison et, de préférence, élément d'arrêt sont reliés de manière imperdable par l'élément de liaison, mais la liaison de forme variable peut être supprimée et l'élément de liaison peut être déplacé en hauteur par rapport au poteau.

11. Agencement selon l'une des revendications 1 à 10, **caractérisé en ce que** l'élément d'arrêt présente une partie en forme de plaque (MP) sur laquelle sont formées des structures d'arrêt (NO), les structures d'arrêt (NO) étant formées par des saillies par rapport à la surface de plaque (MP), en particulier par des parties repoussées à partir de la surface de plaque.

12. Agencement selon la revendication 11, **caractérisé en ce que** des structures complémentaires (GS) correspondant aux saillies des structures d'arrêt sont réalisées sous la forme de renfoncements, en particulier de perçages, qui sont espacés les uns des autres par des nervures de matériau (MS).

13. Agencement selon la revendications 11 ou 12, **caractérisé en ce que** l'élément de fixation (BE) est réalisé par un évidement (DA) dans la partie en forme de plaque (MP), une douille étant formée autour de l'évidement (DA) de l'élément d'arrêt sur la partie en forme de plaque.

14. Agencement selon les revendications 12 et 13, **caractérisé en ce que** la douille fait saillie de la surface de la partie en forme de plaque dans la même direction mais dans une plus grande mesure que les structures d'arrêt et est logée de manière à pouvoir coulisser verticalement dans un évidement (LL) de la deuxième partie en forme de plaque (F21).

15. Agencement selon l'une des revendications 1 à 14, **caractérisé en ce que** l'élément de liaison peut être fixé dans différentes orientations angulaires autour d'un axe de pivotement parallèle à la normale à la surface commune à l'intérieur d'un angle de pivotement limité.
